# EUROPEAN PATENT APPLICATION

(11) **EP 2 725 081 A1**
(43) Date of publication of application: **30.04.2014**
(21) Application number: 12805209.9
(22) Date of filing: 02.02.2012
(51) Int. Cl.: C09K 11/06, C08G 63/187, G01T 1/20, G01T 1/203, G21K 4/00

(54) **RESIN FOR SCINTILLATOR**

(30) Priority: 27.06.2011 JP 2011141630; 27.12.2011 JP 2011284736
(71) Applicant: Teijin Limited, Osaka-shi, Osaka 541-0054 (JP); National Institute of Radiological Sciences, Chiba-shi, Chiba 263-8555 (JP)
(72) Inventor: SHIMIZU, Hisayoshi, Tokyo 100-0013 (JP); MURAKAWA, Fumio, Tokyo 100-0013 (JP); SHIDARA, Zenichiro, Tokyo 100-0013 (JP); NAKAMURA, Hidehito, Chiba 263-8555 (JP); SHIRAKAWA, Yoshiyuki, Chiba 263-8555 (JP)
(74) Representative: Albrecht, Thomas
(86) International application number: PCT/JP2012/052908
(87) International publication number: WO 2013/001847

(57) **Abstract**

A resin for scintillators having high radiation sensitivity, which is obtained without using a wavelength conversion agent.

The resin for the scintillator of a radiation detector contains a polyester having a unit represented by the following formula (1). 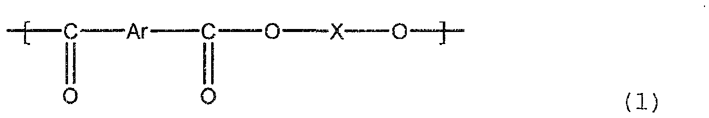 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 2 to 20 carbon atoms or an aromatic hydrocarbon group having 5 to 20 carbon atoms all of which may be substituted by an alkyl group having 1 to 6 carbon atoms or a halogen atom.)

## Description

### TECHNICAL FIELD

The present invention relates to a resin for the scintillator of a radiation detector.

### BACKGROUND ART

Since a conventional radiation detector comprising a plastic scintillator detects radiation by the emission of an added wavelength conversion agent, the detection sensitivity is changed by the deterioration of the wavelength conversion agent along the passage of time. It is known that the wavelength conversion agent is decomposed by strong visible radiation or ultraviolet radiation and the measurement value is often changed by these influences. Further, the efficiency of converting ultraviolet light produced by a base material into visible light by the wavelength conversion agent is low. This low conversion efficiency greatly reduces resolution which is one of indices of the performance of the radiation detector.

It has recently been found that polyethylene terephthalate can be used as a scintillator (non-patent document 1). However, there is room for the improvement of sensitivity to radiation.

### (Patent Document 1) JP-A 11-514742

(Non-patent Document 1) Hidehito Nakamura et al., Radiation measurement with heat-proof polyethylene terephthalate bottle, Proc. R. Soc. A (2010) 466, 2847-2856

### DISCLOSURE OF THE INVENTION

It is an object of the present invention to provide a resin for scintillators having high sensitivity to radiation without using a wavelength conversion agent. It is another object of the present invention to provide a plastic scintillator having high sensitivity. It is still another object of the present invention to provide a radiation detector which is inexpensive, has high sensitivity and can be made large in size and whose detection sensitivity does not change along the passage of time.

The inventors of the present invention conducted intensive studies on a plastic scintillator for radiation detectors. As a result, they found that when a molded product of a resin comprising naphthalenedicarboxylic acid as the main component is used as a scintillator, it can detect radiation with high sensitivity. The present invention was accomplished based on this finding.

The present invention is a resin for the scintillator of a radiation detector, which contains a polyester having a unit represented by the following formula (1). 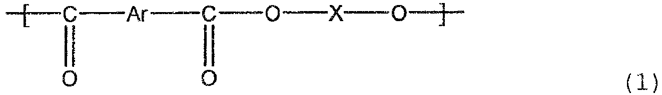 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.)

### BRIEF DESCRIPTION OF THE DRAWINGS

Fig. 1 shows the measurement results of the amount of light of a PEN-1 plate (Example 1);
Fig. 2 shows the measurement results of the amount of light of BC-408 (Comparative Example 1);
Fig. 3 shows the measurement results of the amount of light of a PET-1 plate (Comparative Example 2);
Fig. 4 shows the measurement results of the wavelength distributions of the PEN-1 plate (Example 1), BC-408 (Comparative Example 1) and the PET-1 plate (Comparative Example 2); and
Fig. 5 is a schematic diagram of the radiation detector of the present intention.

### Explanation of reference numerals

- 1: scintillator
- 2: photoelectric conversion device
- 3: electronic amplifier
- 4: radioactive substance
- 5: radiation
- 6: lightproof film
- 7: fluorescence
- 8: reflective plate
- 9: rate meter
- 10: indicator
- 11: setting device
- 12: survey meter detection unit
- 13: survey meter body

### BEST MODE FOR CARRYING OUT THE INVENTION

### <resin for scintillators>

The resin for scintillators of the present invention contains a polyester having a unit represented by the following formula (1)

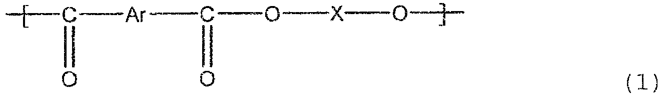

Ar is a naphthalenediyl group or an anthracenediyl group all of which may be substituted by an alkyl group having 1 to 6 carbon atoms or a halogen atom. Examples of the alkyl group having 1 to 6 carbon atoms as a substituent include methyl group, ethyl group, propyl group and hexyl group. Examples of the halogen atom as a substituent include fluorine atom, chlorine atom and bromine atom.

X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.

Examples of the aliphatic hydrocarbon group having 2 to 20 carbon atoms include alkylene groups having 2 to 20 carbon atoms such as ethylene group, trimethylene group, propylene group, tetramethylene group, butylene group, hexamethylene group and octamethylene group. A group represented by the following formula (2) is preferred. 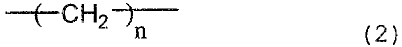 (n is an integer of 2 to 6.)

Examples of the alicyclic hydrocarbon group having 3 to 20 carbon atoms include cycloalkylene groups having 3 to 20 carbon atoms such as cyclobutylene group, cyclohexylene group, cyclohexylenebis(methylene) group, methylcyclohexylene group and cyclooctylene group. A diol residue represented by the following formula (3) and having -CH₂-O- in the molecule may also be used.

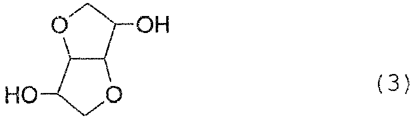

Example of the aromatic hydrocarbon group having 5 to 20 carbon atoms include arylene groups such as phenylene group, phenylenebis(methylene) group, methylphenylene group, naphthalenediyl group and anthracenediyl group.

X may have a substituent exemplified by alkyl groups having 1 to 6 carbon atoms such as methyl group, ethyl group and propyl group and halogen atoms such as fluorine atom, chlorine atom and bromine atom.

The unit represented by the formula (1) is preferably a unit represented by the following formula (4). 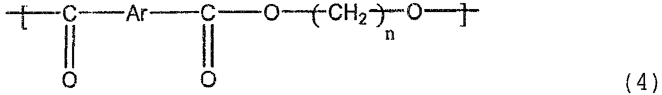 (In the above formula, Ar is a naphthalenediyl group or an anthracenediyl group, and n is an integer of 2 to 6.)

Examples of the resin of the present invention include polyethylene naphthalene dicarboxylate, polypropylene naphthalene dicarboxylate and polybutylene naphthalene dicarboxylate.

The polyester having a unit represented by the formula (1) comprises naphthalenedicarboxylic acid or anthracenedicarboxylic acid as the main acid component.

The naphthalenedicarboxylic acid component is preferably 2,6-naphthalenedicarboxylic acid, a lower alkyl ester derivative thereof, 2,7-naphthalenedicarboxylic acid or a lower alkyl ester derivative thereof. The expression "main acid component" means that the content of the above dicarboxylic acid is 70 mol% or more, preferably 80 mol% or more, more preferably 90 mol% or more based on the total of all the dicarboxylic acid components.

Components which can be copolymerized in an amount of 30 mol% or less based on the total of all the acid components include aliphatic dicarboxylic acids such as oxalic acid, malonic acid, succinic acid, adipic acid, sebacic acid and dodecanedicarboxylic acid, aromatic dicarboxylic acids such as terephthalic acid, isophthalic acid, diphenyldicarboxylic acid, diphenoxyethanedicarboxylic acid, diphenylsulfonedicarboxylic acid and diphenyl ether dicarboxylic acid; alicyclic dicarboxylic acids such as cyclohexanedicarboxylic acid, decalindicarboxylic acid and terelalindicarboxylic acid; and oxyacids such as glycolic acid and p-oxybenzoic acid.

The polyester having a unit represented by the formula (1) comprises a diol having an aliphatic hydrocarbon group having 2 to 20 carbon atoms, an alicyclic hydrocarbon group having 3 to 20 carbon atoms or an aromatic hydrocarbon group having 5 to 20 carbon atoms as the main diol component. The expression "main diol component" means that the content of the above hydrocarbon group is 70 mol% or more, preferably 80 mol% or more, more preferably 90 mol% or more based on the total of all the diol components.

Another diol component is selected from diols having an aliphatic hydrocarbon group having 2 to 20 carbon atoms, an alicyclic hydrocarbon group having 3 to 20 carbon atoms or an aromatic hydrocarbon group having 5 to 20 carbon atoms. Therefore, when the main diol component is a diol having an aliphatic hydrocarbon group, another diol component is selected from a diol having an aliphatic hydrocarbon group, a diol having an alicyclic hydrocarbon group, a diol having an aromatic hydrocarbon group and a mixture thereof.

Preferably, the polyester having a unit represented by the formula (1) comprises an alkylene glycol having 2 to 6 carbon atoms as the main diol component. Although it is preferred that an alkylene glycol having 1 to 6 carbon atoms should be contained in an amount of 70 mol% or more, preferably 80 mol% or more, more preferably 90 mol% based on the total of all the glycol components, neopentyl glycol, cyclohexanedimethanol or bisphenol A may be copolymerized in an amount of 30 mol% or less.

The polyester having a unit represented by the formula (1) may be produced by either transesterification or direct esterification. When it is produced by transesterification, an transesterification reaction catalyst is necessary.

The transesterification reaction catalyst is not particularly limited, and examples thereof include manganese compounds, calcium compounds, magnesium compounds, titanium compounds, zinc compounds, sodium compounds, potassium compounds, cerium compounds and lithium compounds which are widely used as transesterification reaction catalysts for polyethylene terephthalate. A cobalt compound may be contained as a transesterification reaction catalyst which also functions as an orthochromatic agent.

Since a transesterification reaction catalyst is not used unlike the above transesterification method when the polyester having a unit represented by the formula (1) is produced by direct esterification, the catalyst does not need to be deactivated but it is preferred to add a phosphorus compound as a stabilizer so as to ensure that the amount of the residual phosphorus compound becomes 5 to 100 mmol% based on the total of all the acid components. When the amount of the residual phosphorus compound falls within the above range, heat resistance and color become preferred.

An antimony compound and/or a germanium compound are/is preferably used as a polycondensation catalyst. Examples of the antimony compound include antimony oxide, antimony acetate and glycolate antimonite, out of which antimony trioxide is preferred. When an antimony compound is contained, the content of the antimony compound is preferably 5 to 40 mmol% in terms of antimony trioxide based on the total of all the acid components. When the content of the antimony compound is lower than 5 mmol%, the polymerization activity becomes low, the polycondensation time becomes long and the production cycle becomes slow, all of which are unfavorable from the viewpoint of economic efficiency and also the amount of a side-reaction product increases and color deteriorates, all of which are unfavorable from the viewpoint of quality. When the content of the antimony compound is higher than 40 mmol%, blackening is caused by the precipitation of the antimony compound, which is unfavorable from the viewpoint of color, and the amount of the side-reaction product is increased by the promotion of a decomposition reaction disadvantageously.

Germanium dioxide is preferably used as the germanium compound. When a germanium compound is contained, the content of the germanium compound is preferably 15 to 50 mmol% based on the total of all the acid components. When the content of the germanium compound is lower than 15 mmol%, the polymerization activity becomes low, the polymerization activity becomes low, the polycondensation time becomes long and the production cycle becomes slow, all of which are unfavorable from the viewpoint of economic efficiency and also the amount of a side-reaction product increases and color deteriorates, all of which are unfavorable from the viewpoint of quality. When the content of the germanium compound is higher than 50 mmol%, the amount of the side-reaction product is increased by the promotion of a decomposition reaction disadvantageously.

The intrinsic viscosity of the polyester having a unit represented by the formula (1) is preferably 0.4 to 0.8 dl/g, more preferably 0.5 to 0.7 dl/g.

The intrinsic viscosity (IV) of a resin is obtained from data on the viscosity of a solution obtained by heat melting 0.6 g of the resin in 50 ml of a mixed solvent of phenol and tetrachloroethane (weight ratio of 3/2), cooling the obtained resin solution to room temperature and measuring the viscosity of the obtained resin solution at 35°C with an Ostwald viscosity tube.

To obtain the polyester having a unit represented by the formula (1), the reaction temperature of solid-phase polymerization is preferably set to 230°C or lower. When the reaction temperature of solid-phase polymerization is higher than 230°C, the crystallinity of the obtained polymer becomes high, the appearance of a molded article is impaired, and the molded article is whitened as the polymer functions as a nucleating agent disadvantageously.

### (resin composition)

The resin of the present invention may be a resin composition comprising the polyester having a unit represented by the formula (1) and another thermoplastic resin.

Examples of the above thermoplastic resin include polyethylene terephtalate, polytrimethylene terephthalate, polybutylene terephthalate, polyethylene(terephthalate/isophthalate), polytrimethylene(terephthalate/isophthalate), polybutylene(terephthalate/isophthalate), polyethylene terephthalate·polyethylene glycol, polytrimethylene terephthalate·polyethylene glycol, polybutylene terephthalate·polyethylene glycol, polyethylene terephthalate·poly(tetramethyleneoxide)glycol, polytrimethylene terephtalate· poly(tetramethyleneoxide)glycol, polybutylene terephthalate·poly(tetramethyleneoxide)glycol, polyethylene(terephthalate/isophthalate) poly(tetramethyleneoxide)glycol, polytrimethylene(terephthalate/isophthalate)· poly(tetramethyleneoxide)glycol, polybutylene(terephthalate/isophthalate)· poly(tetramethyleneoxide)glycol, polybutylene(terephthalate/succinate), polyethylene(terephthalate/succinate), polybutylene(terephthalate/adipate) and polyethylene(terephthalate/adipate). Polyether sulfone may also be used.

The content of the polyester having a unit represented by the formula (1) in the resin composition is at least 15 parts by weight, preferably 30 parts or more by weight, more preferably 50 parts or more by weight based on 100 parts by weight of the resin composition. Since the resin of the present invention may be a resin containing only the polyester having a unit represented by the formula (1), the upper limit of the content of the polyester having a unit represented by the formula (1) is 100 wt%.

### <scintillator>

The scintillator of the present invention is molded from the above resin. Molding may be injection molding, extrusion molding, hot press molding, vacuum molding, blow molding or injection blow molding.

### <radiation detector>

The radiation detector of the present invention includes a scintillator, a photoelectric conversion device and an electronic amplifier. The scintillator is molded from the above resin. Examples of the photoelectric conversion device include a photomultiplier, a CCD element and a silicon photocell. The radiation detector of the present invention may include electronic equipment such as a calculator and an indicator besides the electronic amplifier.

In the radiation detector of the present invention, light emitted from a scintillator which has received ionization radiation is measured by means of a photoelectric conversion device such as a photomultiplier. The photoelectric conversion device is connected to electronic equipment such as an electronic amplifier to calculate an electric signal produced by the photoelectric conversion device so as to measure the amount of radiation.

Since the radiation detector of the present invention can be made in various shapes which have been impossible in the prior art and used as a resin scintillator which can be mass-produced, it can be widely used in a non-destructive detector using radiation and for the finding of the flow channel of an underground water vein, the monitoring of a γ-ray or electron beam sterilizing device and the detection of an illegal radioactive substance at airports, port and harbor facilities and train stations. The radiation detector of the present invention can be used in a walk-through contamination monitor for measuring the contamination of a worker at an atomic power plant by a radioactive substance on a real-time basis, a drive-through car monitor for measuring the contamination of a truck or a service vehicle by a radioactive substance on a real-time basis, a cosmic radiation monitor to be mounted on an airplane, an artificial satellite or a space platform, a whole body counter for judging the existence of the internal exposure of a person in a small room, and an emergency back contamination detection bed. It may also be used in a cancer diagnosis device such as a radiation camera, a diagnosis device for large animals such as horses and cows, and for the monitoring of the storage management of radioactive substances at hospitals and research institutes.

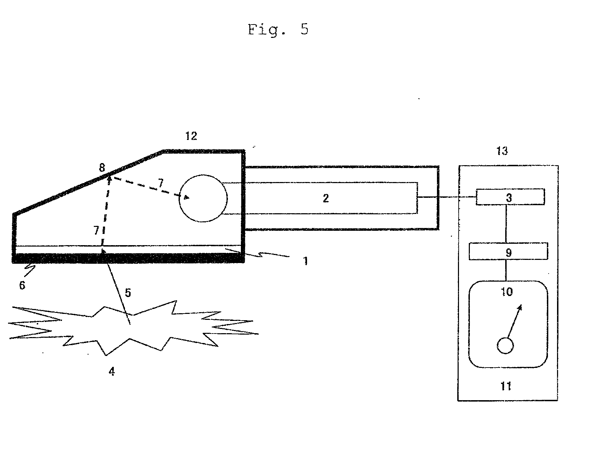

The radiation detector of the present invention will be described with reference to Fig. 5. Radiation (5) from a radioactive substance (4) is input into a survey meter detection unit (12) through a lightproof film (6) so that a scintillator (1) emits fluorescence (7). The fluorescence (7) is introduced into a photoelectric conversion device (2) by a reflective plate (8) to be converted into an electric pulse. The electric pulse is amplified by an electronic amplifier (3) in a survey meter body (13) and displayed by an indicator (10).

### <method of using resin as scintillator>

The present invention includes a method of using a resin containing a polyester having a unit represented by the formula (1) as the scintillator of a radiation detector.

### Examples

### Example 1 radiation detector

### (production of PEN-1 plate)

A transesterification reaction between 100 parts by weight of dimethyl naphthalene dicarboxylate and 51 parts by weight of ethylene glycol was carried out in the presence of 0.010 part by weight (10 mmol%) of cobalt acetate tetrahydrate and 0.030 part by weight (30 mmol%) of manganese acetate tetrahydrate by a commonly used method, 20 minutes after methanol was distilled out, 0.012 part by weight (10 mmol%) of antimony trioxide was added, 0.020 part by weight (50 mmol%) of normal phosphoric acid was added before the end of the transesterification reaction, and a polycondensation reaction was carried out in high vacuum at 295°C to obtain a naphthalene dicarboxylate prepolymer. Solid-phase polymerization was further carried out at 221°C for a residence time of 18 hours to obtain a PEN-1 resin having an intrinsic viscosity of 0.65 dl/g and a crystallinity of 37 %.

The obtained PEN-1 resin was injection molded to obtain PEN-1 plates measuring 125 mm x 150 mm x 6 mm and 50 mm x 50 mm x 5 mm.

### (measurement of radiation detection sensitivity)

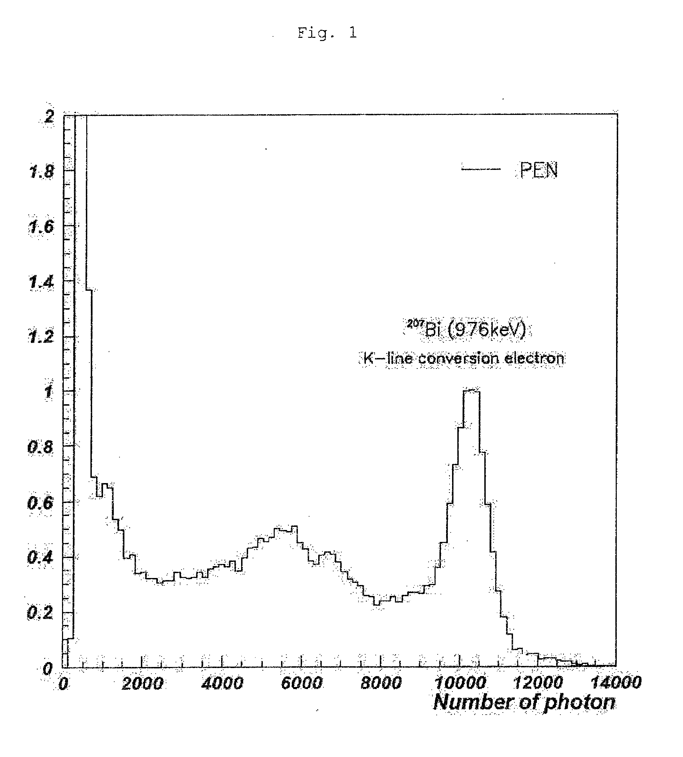

Each of the PEN-1 plates was optically connected to a photomultiplier (H7195 of Hamamatsu Photonics K.K.) which is an optical sensor by optical grease (BC-630 of Saint Gobain Co., Ltd.) to construct a radiation detector. Radiation emitted from the 207Bi radiation source was measured by means of the obtained radiation detector. Fig. 1 shows the measurement result of the amount of light.

### Comparative Example 1

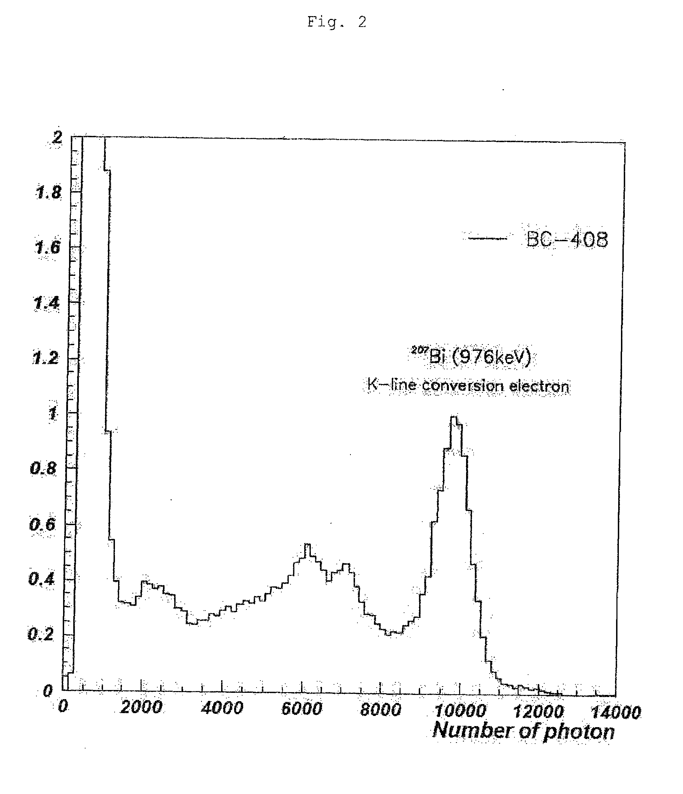

An experiment was conducted in the same manner as in Example 1 except that the BC-408[C₉H₁₀]ₙ] plate of Saint-Gobain Co., Ltd. which is a plastic scintillator was used in place of the PEN-1 plate. Fig. 2 shows the measurement result of the amount of light. The maximum value of luminescence intensity was compared with that of Example 1 and shown in Table 2.

### Comparative Example 2

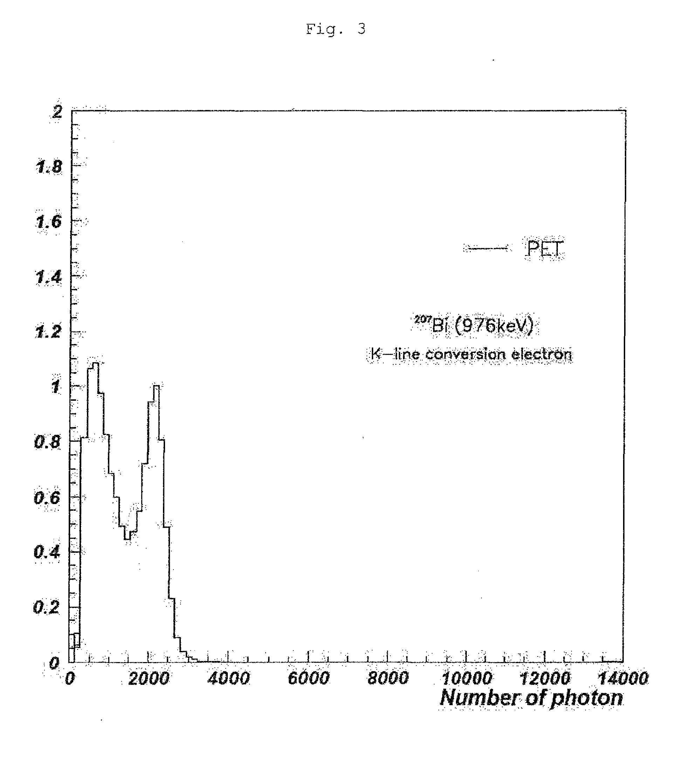

The PET resin (product number: P115, to be referred to as "PET-1 resin" hereinafter) of Nan Ya Plastics Corporation was injection molded to obtain a PET-1 plate measuring 125 mm x 150 mm x 7 mm. An experiment was conducted in the same manner as in Example 1 except that the PET-1 plate was used in place of the PEN-1 plate. Fig. 3 shows the measurement result of the amount of light. The maximum value of luminescence intensity was compared with that of Example 1 and shown in Table 2.

### Comparison between Example 1 and Comparative Examples 1 and 2

Table 1 shows comparison in characteristic properties among PEN-1, BC-408 and PET (P115). BC-408 contains a wavelength conversion agent and shows a maximum fluorescence wavelength of 425 nm. BC-408 is expensive because it contains a wavelength conversion agent. BC-408 has a short service life due to the deterioration of the wavelength conversion agent. In contrast to this, PEN-1 shows a maximum fluorescence wavelength of 425 nm though it does not contain a wavelength conversion agent.

**Table 1**

| | PEN1 | BC-408 | PET-1 (P115) |
|---|---|---|---|
| Manufacturing company | - | Saint-Gobain | Nan Ya Plastics Corp. |
| Density | 1.33 g/cm³ | 1.03 g/cm³ | 1.33 g/cm³ |
| Refractive index | 1.65 | 1.58 | 1.64 |
| Amount of fluorescence | ∼10,500 photon/MeV | 10,000 photon/eV | ∼2,200 photon/MeV |
| Maximum fluorescence wavelength | 425nm | 425nm | 380nm |

As obvious from comparison among Figs. 1 to 3, the amount of light emitted from the PEN-1 plate (Example 1) is 1.05 times that of BC-408 (Comparative Example 1) and 4.70 times that of the PET-1 plate (Comparative Example 2). That is, it was verified that a large amount of light (∼10,500 photon/MeV) is produced without adding the wavelength conversion agent. Peaks in the figures show 976 keV internal conversion electrons emitted from the 207Bi radiation source.

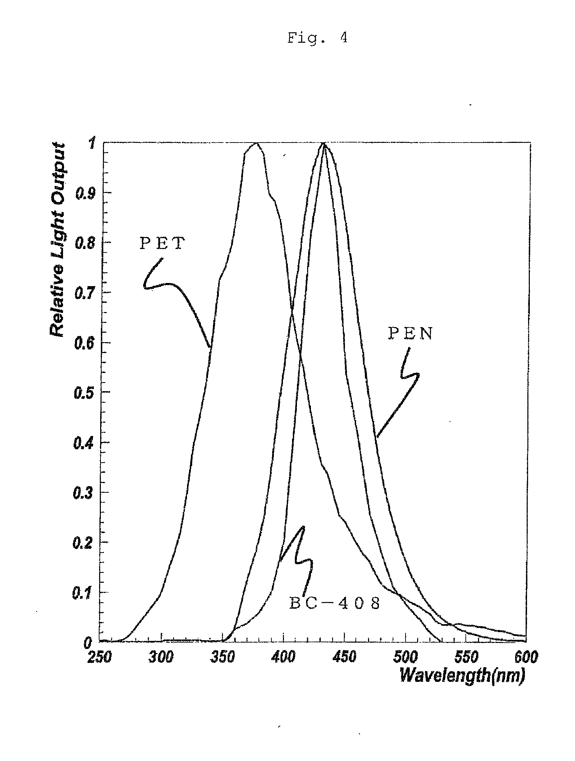

Fig. 4 shows the measurement results of wavelength distributions. As obvious from Fig. 4, the wavelength of light emitted from the PEN-1 plate (Example 1) was measured with a spectrometer (F-2700 of Hitachi Hi-Technologies Corporation). As a result, it is understood that light from the PEN-1 plate has almost the same wavelength (∼ 425 nm) as that of light from the plastic scintillator (Comparative Example 1). The wavelength range of light emitted from PEN-1 well matches the light receiving sensitivity of an optical sensor such as a photomultiplier. Therefore, it is possible to detect radiation with high detection efficiency.

### Example 2 radiation detector (PBN-1/PBN-1 blend) (production of PBN-1)

315.0 parts of dimethyl 2, 6-naphthalene dicarboxylate, 200.0 parts of 1, 4-butanediol and 0.062 part of tetra-n-butyl titanate were injected into a transesterification reactor to carry out a transesterification reaction for 150 minutes while the reactor was heated to 210°C. Then, the obtained reaction product was transferred to a polycondensation reactor to start a polycondensation reaction. The polycondensation reaction was carried out for 110 minutes by gradually reducing from normal pressure to 0.13 kPa (1 Torr) over 75 minutes, increasing the temperature to a predetermined reaction temperature of 260°C at the same time and then maintaining the predetermined polymerization temperature and 0.13 kPa (1 Torr). After the passage of 110 minutes, the polycondensation reaction was terminated, PBN was extruded into a strand, and the strand was cut into chips while it was cooled with water. The solid-phase polymerization of the obtained PBN was carried out at 213°C and 0.13 kPa (1 Torr) or less for 8 hours to obtain PBN-1 resin.

### (production of PEN-1/PBN-1 blend plate)

The PEN-1 resin used in Example 1 and the PBN-1 resin were blended together in a weight ratio of 75/25, and the resulting blend was injection molded by using an injection molding machine (SG260M-HP of Sumitomo Heavy Industries, Ltd.) to obtain a plate measuring 125 mm x 150 nm x 6 mm.

The radiation detection sensitivity of the plate was measured in the same manner as in Example 1 to compare the maximum value of luminescence intensity with that of Example 1. The comparison result is shown in Table 2.

### Example 3 radiation detector (PEN-1/PET-1 blend) (production of PEN/PET blend plate)

The PEN-1 resin used in Example 1 and the PET-1 resin used in Comparative Example 1 were blended together in a weight ratio of 75/25, and the resulting blend was injection molded by using an injection molding machine (SG260M-HP of Sumitomo Heavy Industries, Ltd.) to obtain a PEN-1/PET-1 blend plate measuring 125 mm x 150 mm x 6 mm.

The radiation detection sensitivity was measured in the same manner as in Example 1 to compare the maximum value of luminescence intensity with that of Example 1. The comparison result is shown in Table 2.

### Example 4

### (production of PEN-1/PET-1 blend plate)

The PEN-1 resin used in Example 1 and the PET-1 resin used in Comparative Example 1 were blended together in a weight ratio of 50/50, and the resulting blend was injection molded by using an injection molding machine (SG-150U of Sumitomo Heavy Industries, Ltd.) to obtain a PEN-1/PET-1 blend plate measuring 125 mm x 150 mm x 6 mm.

The radiation detection sensitivity was measured in the same manner as in Example 1 to compare the maximum value of luminescence intensity with that of Example 1. The comparison result is shown in Table 2.

**Table 2**

| | Evaluation sample | Blending ratio (wt%) | Luminescence intensity (relative ratio) |
|---|---|---|---|
| Example 1 | PEN-1 | 100 | 100 |
| Example 2 | PEN-1/PBN-1 | 75/25 | 100 |
| Example 3 | PEN-1/PET-1 | 75/25 | 90 |
| Example 4 | PEN-1/PET-1 | 50/50 | 85 |
| Comparative Example 1 | BC-408 | 100 | 100 |
| Comparative Example 2 | PET-1 | 100 | 20 |

### Effect of the Invention

The resin for scintillators of the present invention provides a transparent scintillator without crystallizing it by optimizing the design of a mold. The resin for scintillators of the present invention can be molded into a scintillator for use in a radiation detector by an ordinary injection molding machine, extrusion molding machine, hot press molding machine, vacuum molding machine, blow molding machine or injection blow molding machine.

The scintillator of the present invention can detect radiation with high sensitivity. Since the scintillator of the present invention emits visible light by radiation, it is not necessary to add a wavelength conversion agent. The performance with respect to radiation of the scintillator of the present invention is equivalent to or higher than that of a conventional plastic scintillator. Since a wavelength conversion agent is not used, the radiation detection sensitivity of the scintillator of the present invention rarely changes along the passage of time. Since the scintillator of the present invention has no optical loss by the wavelength conversion agent, it is excellent in the sensitivity and resolution of a radiation detector.

### Industrial Applicability

The resin for scintillators of the present invention can be used in various radiation detectors.

## Claims

1. A resin for the scintillator of a radiation detector, which contains a polyester having a unit represented by the following formula (1). 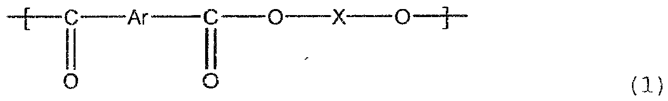 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.)

2. The resin according to claim 1, wherein Ar in the formula (1) is a naphthalenediyl group or an anthracenediyl group, and X is a unit represented by the following formula (2). 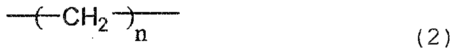 (n is an integer of 2 to 6.)

3. The resin according to claim 1 which is at least one selected from the group consisting of polyethylene naphthalene dicarboxylate, polypropylene naphthalene dicarboxylate and polybutylene naphthalene dicarboxylate.

4. The resin according to claim 1 which contains a polyester having a unit represented by the formula (1) and another thermoplastic resin.

5. The resin according to claim 4, wherein the thermoplastic resin is at least one selected from the group consisting of polyethylene terephtalate, polytrimethylene terephtalate, polybutylene terephthalate and polyether sulfone.

6. The resin according to claim 4, wherein the content of the polyester having a unit represented by the formula (1) in the resin is 15 parts or more by weight based on 100 parts by weight of the resin.

7. A scintillator made of the resin of any one of claims 1 to 6.

8. A radiation detector comprising a scintillator, a photoelectric conversion device and an electronic amplifier, wherein the scintillator is made of a resin containing a polyester having a unit represented by the following formula (1). 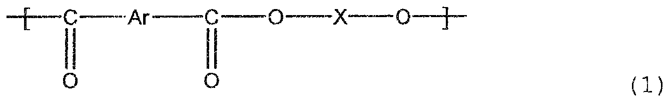 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.)

9. The radiation detector according to claim 8, wherein Ar in the formula (1) is a naphthalenediyl group or an anthracenediyl group, and X is a unit represented by the following formula (2). 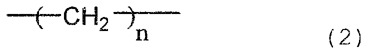 (n is an integer of 2 to 6.)

10. A method of using a resin containing a polyester having a unit represented by the following formula (1) as the scintillator of a radiation detector. 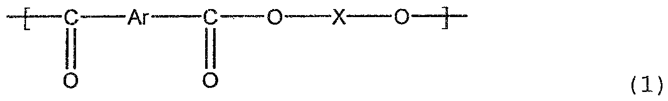 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 2 to 20 carbon atoms or an aromatic hydrocarbon group having 5 to 20 carbon atoms all of which may be substituted by an alkyl group having to 6 carbon atoms or a halogen atom.)

11. The method according to claim 10, wherein Ar in the formula (1) is a naphthalenediyl group or an anthracenediyl group, and X is a unit represented by the following formula (2). 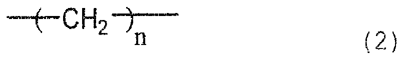 (n is an integer of 2 to 6.)

## Amended claims

### Amended claims under Art. 19.1 PCT

**1.** (Amended) A scintillator of a radiation detector, comprising a resin which contains a polyester having a unit represented by the following formula (1), 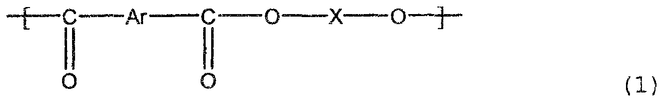 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.)

**2.** (Amended) The scintillator according to claim 1,
wherein Ar in the formula (1) is a naphthalenediyl group or an anthracenediyl group, and X is a unit represented by the following formula (2). 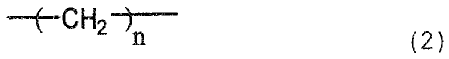 (n is an integer of 2 to 6.)

**3.** (Amended) The scintillator according to claim 1, wherein the resin is at least one selected from the group consisting of polyethylene naphthalene dicarboxylate, polypropylene naphthalene dicarboxylate and polybutylene naphthalene dicarboxylate.

**4.** (Amended) The scintillator according to claim 1, wherein the resin contains a polyester having a unit represented by the formula (1) and another thermoplastic resin.

**5.** (Amended) The scintillator according to claim 4, wherein the thermoplastic resin is at least one selected from the group consisting of polyethylene terephthalate, polytrimethylene terephthalate, polybutylene terephthalate and polyether sulfone.

**6.** (Amended) The scintillator according to claim 4, wherein the content of the polyester having a unit represented by the formula (1) in the resin is 15 parts or more parts by weight based on 100 parts by weight of the resin.

**7.** (cancelled)

**8.** A radiation detector comprising a scintillator, a photoelectric conversion device and an electronic amplifier, wherein the scintillator is made of a resin containing a polyester having a unit represented by the following formula (1). 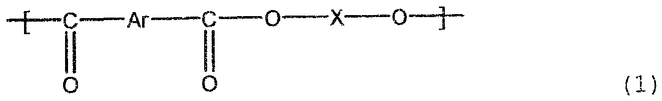 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 3 to 20 carbon atoms or an aromatic hydrocarbon group having 5 to 20 carbon atoms all of which may be substituted by an alkyl group having 1 to 6 carbon atoms or a halogen atom.)

**9.** The radiation detector according to claim 8, wherein Ar in the formula (1) is a naphthalenediyl group or an anthracenediyl group, and X is a unit represented by the following formula (2). 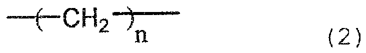 (n is an integer of 2 to 6.)

**10.** A method of using a resin containing a polyester having a unit represented by the following formula (1) as the scintillator of a radiation detector. 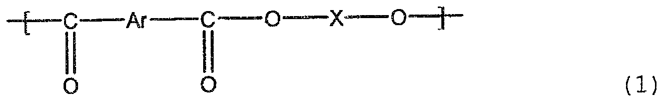 (In the above formula (1), Ar is a naphthalenediyl group or an anthracenediyl group all of which may be substituted by an alkyl group having 1 to 6 carbon atoms or a halogen atom. X is an aliphatic hydrocarbon group having 2 to 20 carbon atoms, an alicyclic hydrocarbon group having 2 to 20 carbon atoms or an aromatic hydrocarbon group having 5 to 20 carbon atoms all of which may be substituted by an alkyl group having 1 to 6 carbon atoms or a halogen atom.)

**11.** The method according to claim 10, wherein Ar in the formula (1) is a naphthalenediyl group or an anthracenediyl group, and X is a unit represented by the following formula (2). 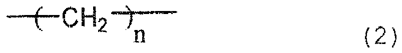 (n is an integer of 2 to 6.)
